# EUROPÄISCHE PATENTSCHRIFT

(11) **EP 0 685 622 B1**
(45) Veröffentlichungstag und Bekanntmachung des Hinweises auf die Patenterteilung: **26.08.1998**
(21) Anmeldenummer: 95108076.1
(22) Anmeldetag: 26.05.1995
(51) Int. Cl.: E05D 7/04, B62D 65/00

(54) **Verfahren zur Montage eines schwenkbeweglichen Fahrzeugteils und Scharnier zu dessen Realisierung**
Method of assembling a pivoting vehicle component and hinge for the implementation
Procédé pour le montage d'un composant pivotant de véhicule et charnière pour la réalisation

(30) Priorität: 01.06.1994 DE 4419170
(43) Veröffentlichungstag der Anmeldung: 06.12.1995
(73) Patentinhaber: ADAM OPEL AG, 65423 Rüsselsheim (DE)
(72) Erfinder: Bratke, Dieter N., Ing., D-64521 Gross-Gerau (DE)
(74) Vertreter: Bergerin, Ralf, Dipl.-Ing.

(56) Entgegenhaltungen:
- DE-A- 4 120 555
- US-A- 4 807 331
- US-A- 4 841 598

## Beschreibung

Die Erfindung bezieht sich auf ein Montageverfahren im Kraftfahrzeugbau, insbesondere auf das Problem der Montage einer Fahrzeugtür an einem Türrahmen der Fahrzeugkarosserie. Bei der Türmontage werden hohe Anforderungen gestellt, deren Erfüllung funktionelle und qualitative Vorteile mit sich bringt. Eine spezielle Anforderung ist die positionsgenaue Montage der Kraftfahrzeugtüren, wobei Fertigungstoleranzen zu berücksichtigen sind. Eine räumliche Einstellbarkeit der Türposition muß gegeben sein. Dabei muß aber gewährleistet werden, daß die Scharnierachsen mehrerer zu einer Fahrzeugtür gehörender Scharniere annähernd koaxial zueinander verlaufen. Eine fehlende Koaxialität hat Verspannungen der Tür bzw. des Türrahmens beim Öffnen und Schließen zur Folge und ist Ursache für erhöhten Verschleiß von Scharnierbolzen. Ungenügende Positionierungsmöglichkeiten bewirken unter Umständen eine unzureichende Anlage der Fahrzeugtür und wirken sich negativ auf das äußere Erscheinungsbild des Fahrzeugs aus. Insgesamt ist ein relativ hoher Aufwand für die positionsgenaue Türmontage zu betreiben, wobei Montagehilfsmittel oder automatisierte Lösungen nur bedingt einsetzbar sind.

Eine weitere Forderung besteht darin, eine bereits montierte Fahrzeugtür auch wieder abnehmen zu können, um Platz für die Montage der Fahrgastzellenausstattung zu schaffen bzw. Vorteile bei der Fahrzeuglackierung zu erreichen. Die endgültige Türmontage soll dann mit geringem Aufwand ohne Durchführung einer neuen Positionseinstellung möglich sein.

Durch die DE-OS 41 20 555 ist ein Verfahren zum Montieren einer Tür bekannt, bei dem die Tür zuerst in eine vorläufige Position gebracht wird, zumindest eine Scharnierschraube provisorisch angezogen und die Tür dann um die Scharnierschraube verschwenkt wird, um die endgültige Position einzustellen. Da die Tendenz besteht, daß sich die Tür durch ihr Eigengewicht abgesenkt, soll hier Abhilfe geschaffen werden. Eine Positionseinstellung ist somit nur begrenzt in einer Raumebene möglich, was nicht ausreichend ist.

Ein zweites Montageverfahren ist in der DE-OS 40 40 582 beschrieben, wobei hier ein Scharnier einerseits an der Fahrzeugtür und andererseits an dem Türrahmen verschweißt wird. Vorteilhaft ist hier, daß die Verschweißung erst erfolgt, wenn sich die Tür in ihrer genau vorgesehenen Position befindet. Korrekturen der Türposition sind möglich, ohne daß ein Verschieben der Scharnierachse erforderlich wird. Insbesondere ist ein Scharnierflügel zweiteilig ausgebildet. Die beiden Scharnierflügelteile werden erst dann miteinander verschweißt, wenn eine genaue Türpositionierung in allen drei Raumebenen erfolgt. Von Nachteil ist aber, daß eine spätere Nachjustierung der Fahrzeugtür nicht möglich ist. Muß die Tür beispielsweise nach einem Unfall erneut ausgerichtet werden, ist ein hoher Aufwand erforderlich. Da beim Schweißen auch Schweißspritzer im Schweißbereich herum fliegen, können äußere Karosserieflächen negativ betroffen und aufwendige Nacharbeiten erforderlich werden. Vergleichbare Nachteile bringen auch in der DE-OS 36 20 004 oder der DE-PS 33 40 634 beschriebene Montageverfahren mit sich.

Besondere Anforderungen werden auch an die zur Realisierung der Montageverfahren erforderlichen Scharniere gestellt. Die Scharniere müssen sehr fest mit dem Türrahmen und der Fahrzeugtür verbindbar sein, da extrem hohe Kräfte (beispielsweise beim Aufschlagen der Tür) wirken können. Über die Scharniere muß die Position der Tür, wie beschrieben, in drei Raumebenen einstellbar sein. Die eingestellte Position der Tür muß dauerhaft erhalten bleiben, sollte aber auch noch nach Jahren nachjustierbar sein.

Aus der DE-OS 29 19 190 ist ein Scharnier bekannt, das Einstellmöglichkeiten in drei Raumebenen bietet. Ein Scharnierflügel ist zweiteilig ausgeführt, wobei eine doppelkeilförmige Schraubfläche zwischen den beiden Teilen vorgesehen ist. Die beiden Teile können in zwei Ebenen relativ zueinander verschoben und beispielsweise um eine Achse relativ zueinander verschwenkt werden. Eine Nachjustierung ist auch noch nach dem Verschweißen des Scharniers an dem Türrahmen bzw. der Fahrzeugtür möglich. Die Einstellung der richtigen Türpositionen erscheint jedoch recht kompliziert, da es nicht möglich ist, sie in den drei Ebenen unabhängig voneinander vorzunehmen. Da zumindest zwei Scharniere einer Fahrzeugtür separat eingestellt werden müssen, kann es auch zu Verspannungen der Tür bzw. zum Verlagern der Scharnierachsen kommen, wobei ihre Koaxialität verlorengehen kann.

Ein vergleichsweise vorteilhaft gestaltetes Scharnier ist in der DE-OS 29 37 609 beschrieben (ähnlich auch US-A-4 807 331), wobei auch hier ein Scharnierflügel zweiteilig ausgebildet ist. Der genannte, am Türrahmen zu befestigende Scharnierflügel ist zweiteilig ausgebildet, um zu ermöglichen, daß die Tür demontiert und in gleicher Position wieder montiert werden kann. Darum ist eine genaue und unveränderbare Zuordnung der beiden Scharnierflügelteile zueinander geschaffen worden. Die Scharnierflügel werden letztlich an dem Türrahmen bzw. der Fahrzeugtür unter Inkaufnahme der weiter oben genannten Nachteile verschweißt. Eine Positionseinstellung ist maximal in zwei Raumebenen möglich. Nachjustierungen können nicht erfolgen.

Es ist Aufgabe der vorliegenden Erfindung, ein Montageverfahren für Kraftfahrzeugtüren und ein zur Realisierung des Verfahrens erforderliches Scharnier zu schaffen, wodurch es möglich sein soll, Fahrzeugtüren teilautomatisiert mit geringem Aufwand positionsgenau an Türrahmen festzulegen. Die Demontage der Tür soll ohne Verlust der Positionseinstellung möglich sein, eine Nachjustierbarkeit muß erfolgen können und Scharnierbolzen mehrerer zu einer Tür gehörender Scharniere sollen nahezu spannungsfrei etwa koaxial zueinander ausgerichtet sein. Auf den Einsatz von Schweißverfahren sollte weitestgehend verzichtet werden.

Zur Lösung dieser Aufgaben zeichnet sich das Montageverfahren durch die im Patentanspruch 1 angegebenen Merkmale aus, wobei sich weitere Einzelheiten aus den Patentansprüchen 2 bis 7 ergeben. Merkmale des erfindungsgemäßen Scharniers ergeben sich aus dem Patentanspruch 8.

Die folgende Verfahrensweise der Montage einer Fahrzeugtür an einem Türrahmen wird vorgeschlagen:
1. Befestigung eines eine Scharnierachse definierenden Scharnierflügels an der Fahrzeugtür oder an dem Türrahmen, wobei Scharnierachsen mehrerer Scharniere soweit als möglich koaxial ausgerichtet werden; die Befestigung kann vorzugsweise durch Schrauben oder Nieten aber auch durch Schweißen erfolgen.
2. Überführung der Fahrzeugtür in ihre toleranzabhängige Sollposition mittels einer Hilfsvorrichtung;
3. Verschrauben eines ersten Teils des zweiten (zweiteiligen) Scharnierflügels an dem Türrahmen bzw. der Fahrzeugtür;
4. Verschrauben eines zweiten Teils des zweiten Scharnierflügels an dem ersten Scharnierflügelteil, wobei die beiden Scharnierflügelteile bereits vor der Montage miteinander in Verbindung stehen und das zweite Scharnierflügelteil über einen Scharnierbolzen gelenkig an dem ersten Scharnierflügel gelagert ist.

Beim Verschrauben der beiden Scharnierflügelteile des zweiten Scharnierflügels findet eine selbsttätige Anpassung dieses Scharnierflügels an die dreidimensionalen Toleranzen zwischen der Fahrzeugtür und dem Türrahmen statt. Dies erfolgt, in dem die Verschraubung des ersten Scharnierflügelteils am Türrahmen bzw. der Fahrzeugtür und des zweiten Scharnierflügelteils an dem ersten Scharnierflügelteil mit Spiel in allen drei Raumebenen erfolgt. Da die Tür von der Hilfsvorrichtung in der genauen Position gehalten wird, positionieren sich die Scharniere beim Verschrauben selbsttätig und unabhängig voneinander, ohne daß die Lage der Scharnierachsen betroffen ist.

Jede Schraubfläche (oder auch Anlagefläche) der beiden Scharnierflügelteile ermöglicht Relativbewegungen in maximal zwei Raumebenen, ohne daß die flächige Anlage verloren geht. Sind die Schraubflächen des ersten und des zweiten Scharnierflügelteils in der Einbaulage annähernd rechtwinklig zueinander ausgerichtet, können Verstellungen in allen Raumebenen erfolgen. Ein Scharnierflügelteil hat zwei begrenzte Freiheitsgrade, das andere einen begrenzten Freiheitsgrad. Besonders vorteilhaft ist es, wenn die Schraubflächen etwa senkrecht im Raum stehen und einerseits in sowie andererseits quer zur Fahrtrichtung des Kraftfahrzeugs ausgerichtet sind. Dann kann die Höhen-, Breiten- und Tiefenposition der Fahrzeugtür jeweils absolut unabhängig von den beiden anderen Positionen eingestellt werden.

Die Fahrzeugtür ist demontierbar ohne Verlust der Positionseinstellung, wenn entweder der Scharnierbolzen gezogen wird, wie dies bekannt ist, oder wenn der erste Scharnierflügel wieder von der Fahrzeugtür bzw. dem Türrahmen gelöst wird. Da diese ersten Scharnierflügel absolut positionsgenau beispielsweise zu verschrauben sind, kann diese Position auch jederzeit wieder eingenommen werden. Verschraubungen des zweiten, zweiteiligen Scharnierflügels sind davon nicht betroffen.

Ein zur Realisierung des Verfahrens erforderliches, zweiflügeliges Scharnier muß einen Scharnierflügel aufweisen, der positionsgenau beispielsweise durch Paßschrauben befestigbar oder verschweißbar ist. Durch diesen Scharnierflügel wird die genaue Lage der Scharnierachse definiert. Ein zweiter Scharnierflügel muß zweiteilig ausgebildet sein, wobei ein erstes, etwa rechtwinkliges Scharnierflügelteil an dem Türrahmen bzw. der Fahrzeugtür verschraubbar ist und ein zweites Scharnierflügelteil einerseits an dem ersten Scharnierflügelteil verschraubt ist. Andererseits ist dieses zweite Scharnierflügelteil über den Scharnierbolzen an dem ersten Scharnierflügel gelagert. Die Verschraubung der beiden Scharnierflügelteile erfolgt an etwa rechtwinklig zueinander ausgerichteten Schraubflächen (Anlageflächen), wobei eine Verschraubung mit Spiel in zwei Raumebenen erfolgt und die zweite Verschraubung mit Spiel in der dritten Raumebene möglich ist. Durchgangsöffnungen für zumindest zwei Schrauben je Scharnierflügelteil sind beispielsweise als den Schraubendurchmesser überragende Bohrungen und als Langloch ausgeführt.

Details der Erfindung sind aus der folgenden Beschreibung eines Ausführungsbeispiels ersichtlich. In den zugehörigen Zeichnungen zeigt:
- Fig. 1:: eine perspektivische Darstellung einer Fahrzeugkarosserie in der Phase der Türmontage;
- Fig. 2:: eine perspektivische, teilweise geschnittene Darstellung eines Scharniers zur Verwendung bei dem Montageverfahren gemäß Fig. 1.

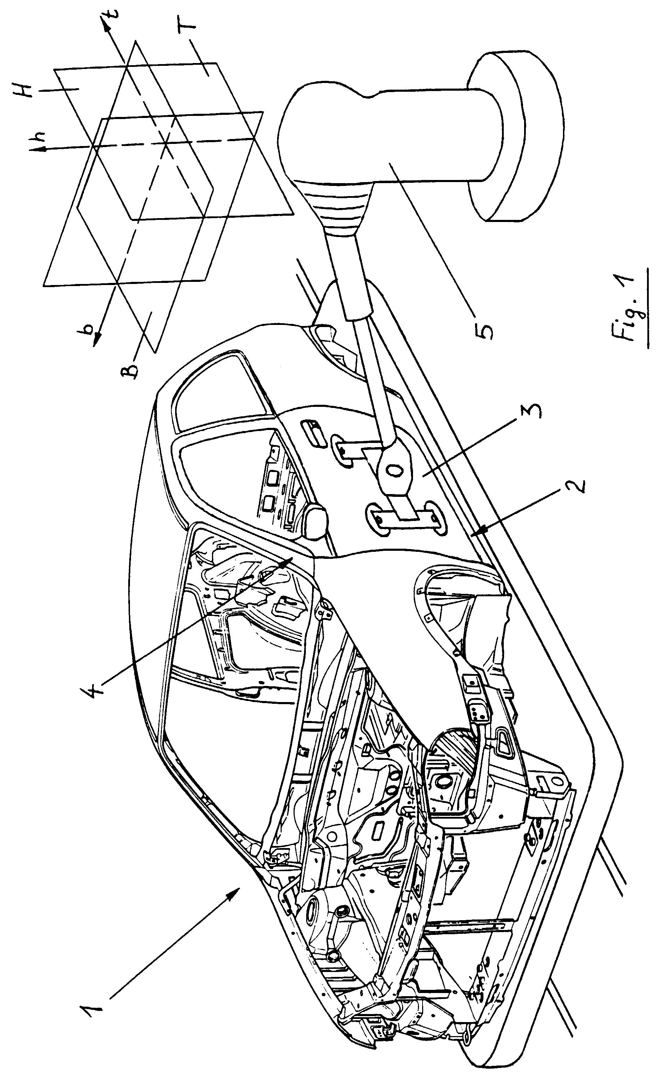

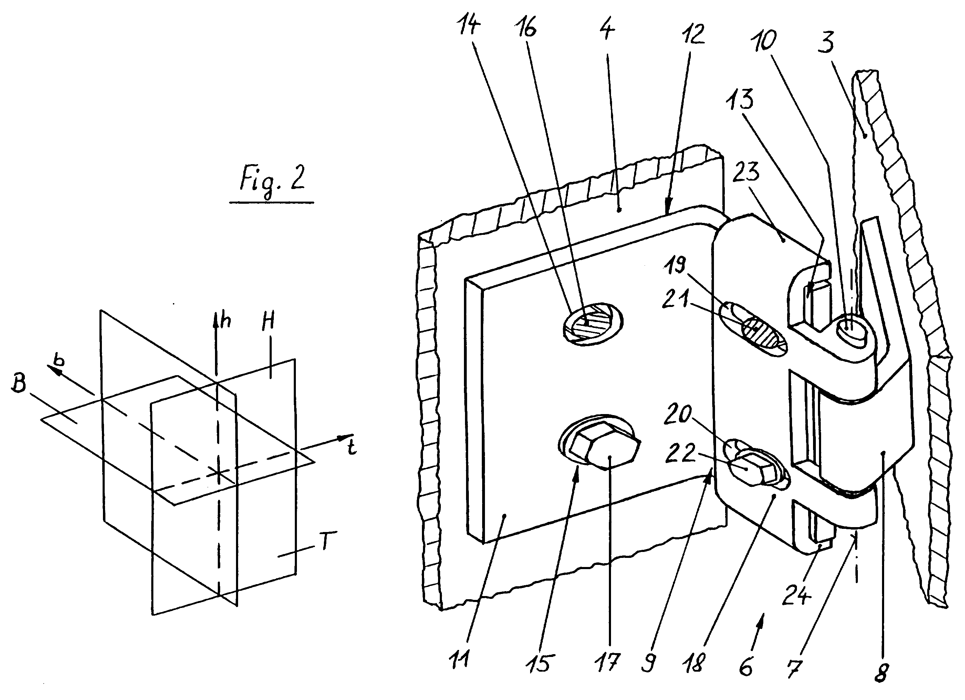

Die schematische Darstellung in Fig. 1 zeigt eine auf einem Montageband befindliche Fahrzeugkarosserie 1 im Bereich einer Türmontagestation. Die Karosserie 1 weist eine Öffnung 2 auf, in die eine Fahrzeugtür 3 paßgenau einzusetzen ist. Die Fahrzeugtür 3 ist schwenkbeweglich an einem Türrahmen 4 zu lagern. Das genaue Positionieren der Fahrzeugtür 3 in der Öffnung 2 erfolgt mittels einer Hilfseinrichtung 5. Die Tür 3 wird durch die Hilfseinrichtung 5 in eine Sollposition überführt, die (wie gezeigt) als Geschlossen-Position definiert oder auch als Offen-Position vorgegeben sein kann. Die Genauigkeit der eingenommenen Türposition kann entweder automatisch durch geeignete Sensorik oder subjektiv überprüft werden. Dabei orientiert sich die Hilfseinrichtung 5 an festen Elementen der Fahrzeugkarosserie 1, indem sie deren Position indirekt erfaßt oder sich an diesen abstützt. Ggf. wird eine Positionsfeineinstellung durchgeführt. Zur positionsgenauen Lagerung der Fahrzeugtür 3 am Türrahmen 4 sind zwei Scharniere 6 vorgesehen, von denen eines in Fig. 2 gezeigt ist. Die weitere Beschreibung des Montageverfahrens und des zur Verfahrensdurchführung erforderlichen Scharniers 6 erfolgt mit Bezug auf Fig. 2. Zur besseren Verdeutlichung der räumlichen Position der einzelnen Bauelemente sind in beiden Figuren drei Raumebenen H, B, T gezeigt, wobei H eine etwa senkrecht und parallel zur Fahrtrichtung F ausgerichtete Höhenebene ist, mit B eine etwa senkrecht und quer zur Fahrtrichtung F stehende Breitenebene gekennzeichnet ist und T eine etwa horizontal liegende Tiefenebene bezeichnet. Das gezeigte Achsenkreuz beinhaltet damit die Höhe h, die Breite b und die Tiefe t.

Um die weiter oben beschriebene, exakte Position der Fahrzeugtür 3 zu erreichen, muß die Tür 3 relativ zur Karosserie 1 in allen Raumebenen H, B, T ausgerichtet und anschließend in dieser Position gehalten werden.

An einer Fläche der Fahrzeugtür 3 sind zwei Scharniere 6 derart zu haltern, daß Scharnierachsen 7 beider Scharniere 6 etwa koaxial zueinander ausgerichtet sind, was vor der Türmontage erfolgt. Speziell wird jeweils ein erster Scharnierflügel 8 an der Tür 3 verschraubt, vernietet oder auch verschweißt. Die Art dieser Verbindung ist nicht wesentlich für die Erfindung. Wesentlich ist die genaue und unveränderbare Ausrichtung der Scharnierachsen 7.

Ein zweiter Scharnierflügel 9 ist durch einen Scharnierbolzen 10 gelenkig an dem ersten Scharnierflügel 8 gelagert. Dieser Scharnierflügel 9 ist zweiteilig ausgebildet und erlaubt es, daß Abstandstoleranzen zwischen der Tür 3 und dem Türrahmen 4 beim Verschrauben des Scharnierflügels 9 selbsttätig ausgeglichen werden. Aufgrund von Fertigungstoleranzen ist die räumliche Lage der Scharnierachse 7 relativ zum Türrahmen 4 begrenzt variabel. Durch den zweiten Scharnierflügel 9 sind in allen drei Raumebenen H, B, T variable Abstände zwischen Scharnierachse 7 und Türrahmen 4 überbrückbar.

Ein erstes Scharnierflügelteil 11 ist annähernd rechtwinklig ausgebildet, wodurch zwei Schraubflächen 12, 13 definiert werden, die etwa rechtwinklig aufeinander stehen. Die Schraubfläche 12 kommt zur Anlage an den Türrahmen 4. Der entsprechende Winkelabschnitt des Scharnierflügelteils 11 ist mit zwei Bohrungen 14, 15 versehen. Zwei Schrauben 16, 17 können durch die Bohrungen 14, 15 geführt und in Gewindebohrungen des Türrahmens 4 verschraubt werden. Dabei ist der Durchmesser der Bohrungen 14, 15 deutlich größer als der Durchmesser der Schrauben 16, 17, so daß das erste Scharnierflügelteil 11 bei gelösten Schrauben 16, 17 in der Fahrzeughöhenebene H und in der Tiefenebene T begrenzt beweglich ist. Die möglichen Toleranzen sind ausschlaggebend für die notwendige Differenz der genannten Durchmesser.

Ein zweites Scharnierflügelteil 18 des Scharnierflügels 9 kommt zur Anlage an die Schraubfläche 13 des ersten Scharnierflügelteils 11. Dieses Scharnierflügelteil 18 weist Langlöcher 19, 20 auf, die sich in Richtung der Breite b erstrecken. Durch die Langlöcher 19, 20 wird jeweils eine Schraube 21, 22 hindurch geführt und in Gewindebohrungen des ersten Scharnierflügelteils 11 eingedreht. Bei gelösten Schrauben 21, 22 ist das zweite Scharnierflügelteil 18 relativ zum ersten Scharnierflügelteil 11 und damit zum Türrahmen 4 in Richtung der Fahrzeugbreitenebene B begrenzt beweglich. Auch die Länge der Langlöcher 19, 20 richtet sich nach den maximal möglichen Toleranzen. Zwei Abwinklungen 23, 24 des zweiten Scharnierflügelteils 18 verhindern nahezu, daß Vertikalbewegungen zwischen beiden Scharnierflügelteilen 11, 18 stattfinden können.

Die Schrauben 16, 17, durch die das Scharnierflügelteil 11 am Türrahmen 4 gehaltert wird, könnten auch bei anderer Gestaltung des Scharnierflügelteils 11 in der Ebene der Schraubfläche 13 liegen. Beispielsweise könnte das (andere) Scharnierflügelteil zwei Laschen ober- und unterhalb der Schraubfläche 13 aufweisen, die in der Ebene der Schraubfläche 12 liegen. Die beim Verschrauben der Schrauben 16, 17 wirkenden Kräfte würden dann exakt innerhalb der Ebene der Schraubfläche 13 liegen und die Scharnierachse 7 schneiden, da diese ebenfalls vorzugsweise in der Ebene der Schraubfläche 13 liegt. Somit wäre ein Abkippen des Scharnierflügels 9 beim Verschrauben ausgeschlossen, was aber auch von untergeordneter Bedeutung ist, wenn die Schrauben 16, 17, wie gezeigt, nahezu in der Ebene der Schraubfläche 13 liegen.

Das Verfahren der Türmontage ist nunmehr denkbar einfach durchführbar, wobei ein sehr präziser Türeinbau mit geringem Aufwand möglich ist: Die Tür mit den daran gehalterten Scharnieren 6 wird wie eingangs beschrieben positioniert. Die Schrauben 21, 22 können dabei fest oder nur provisorisch angezogen sein. Ist die Fahrzeugtür 3 in ihrer Sollposition, können die Schrauben 16, 17 eingesetzt und fest angezogen werden, wobei das Scharnierflügelteil 11 selbsttätig die richtige Position einnimmt. Sind die Schrauben 21, 22 dabei nur provisorisch - also leicht - angezogen, stellt sich die richtige Scharnierflügelbreite b gleichzeitig selbsttätig ein und die Schrauben 21, 22 können nach den Schrauben 16, 17 ebenfalls fest angezogen werden. Sind die Schrauben 21, 22 bei der Türpositionierung fest angezogen, verspannt sich die Hilfsvorrichtung 5 beim Festziehen der Schrauben 16, 17 elastisch. Anschließend sind dann die Schrauben 21, 22 kurz zu lösen, die Hilfsvorrichtung 5 entspannt sich, die Tür nimmt wieder ihre Sollposition ein und die Schrauben 21, 22 können fest angezogen werden.

Das Scharnier 6 könnte auch umgedreht eingebaut werden, wobei dann der Scharnierflügel 8 am Türrahmen 4 gehaltert und der Scharnierflügel 9 an der Fahrzeugtür 3 verschraubt wird. Von Vorteil ist jedoch immer, wenn die Schraubflächen 12, 13 des ersten Scharnierflügelteils 11 möglichst genau in zwei der drei genannten Raumebenen H, B, T liegen. Die Höhenebene H und die Breitenebene B bieten sich dafür besonders an. So ist es möglich, Positionsveränderungen der Tür 3 in den drei Raumebenen H, B, T unabhängig voneinander durchzuführen, was auch noch nach vielen Jahren Betriebsdauer möglich ist.

Das beschriebene Montageverfahren hat zur Folge, daß sich das Scharnier 6 beim Verschrauben selbst einstellt und somit nur geringster Aufwand zum Erreichen der optimalen Türposition vonnöten ist. Die Scharnierbolzen 10 sind nahezu spannungsfrei und verschleißen somit kaum. Zum Zwecke der Türdemontage sind die Scharnierbolzen 10 einfach herausziehbar, wobei die genaue Scharniereinstellung erhalten bleibt. Ist der Scharnierflügel 8 verschraubt, könnten auch diese Schraubverbindungen zum Zwecke der Türdemontage gelöst werden.

## Patentansprüche

1. Verfahren zur Montage eines schwenkbeweglichen Fahrzeugteils, insbesondere einer Fahrzeugtür (3) an einem Türrahmen (4), bei dem
- an der Fahrzeugtür (3) oder dem Türrahmen (4) zumindest zwei zweiflügelige Scharniere (6) mit etwa koaxial zueinander gelegenen Scharnierachsen (7) gehaltert werden, indem jeweils ein Scharnierflügel (8) verschweißt, verschraubt oder vernietet wird,
- die Fahrzeugtür (3) mittels einer Hilfsvorrichtung (5) in die gewünschte Sollposition relativ zum Türrahmen (4) überführt und in dieser gehalten wird und
- anschließend jeweils ein erstes Teil (11) des zweiten Scharnierflügels (9) mit dem Türrahmen (4) bzw. der Fahrzeugtür (3) und jeweils ein zweites Teil (18) des zweiten Scharnierflügels (9) mit dem ersten Teil (11) verschraubt wird, wobei eine selbsttätige Anpassung dieses Scharnierflügels (9) an die räumlichen Toleranzen zwischen der Fahrzeugtür (3) und dem Türrahmen (4) erfolgt.

2. Verfahren zur Montage eines schwenkbeweglichen Fahrzeugteils nach Anspruch 1, bei dem die beiden Teile (11, 18) des zweiteiligen Scharnierflügels (9) während der Türpositionierung mittels der Hilfsvorrichtung (5) nur locker und relativ zueinander beweglich miteinander verschraubt sind und nach der Türpositionierung und der Verschraubung des ersten Scharnierflügelteils (11) an dem Türrahmen (4) bzw. der Fahrzeugtür (3) fest miteinander verschraubt werden.

3. Verfahren zur Montage eines schwenkbeweglichen Fahrzeugteils nach Anspruch 1, bei dem die beiden Teile (11, 18) des zweiteiligen Scharnierflügels (9) während der Türpositionierung mittels der Hilfsvorrichtung (5) fest miteinander verschraubt sind, die Hilfsvorrichtung (5) bei der Verschraubung des ersten Scharnierflügelteils (11) an dem Türrahmen (4) bzw. der Fahrzeugtür (3) verspannt wird und bei dem die Verschraubung zwischen den beiden Scharnierflügelteilen (11, 18) anschließend kurz gelockert und wieder fest angezogen wird, wobei dann keine Verspannung der Hilfsvorrichtung (5) mehr vorliegt.

4. Verfahren zur Montage eines schwenkbeweglichen Fahrzeugteils nach den Ansprüchen 1 bis 3, bei dem einerseits die Verschraubung des ersten Scharnierflügelteils (11) an dem Türrahmen (4) bzw. der Fahrzeugtür (3) und andererseits die Verschraubung der beiden Scharnierflügelteile (11, 18) aneinander mit etwa rechtwinklig zueinander gelegenen Schraubflächen (12, 13) durch jeweils zumindest zwei Schrauben (16, 17, 21, 22) erfolgt.

5. Verfahren zur Montage eines schwenkbeweglichen Fahrzeugteils nach den Ansprüchen 1 bis 4, bei dem Relativbewegungen des ersten Scharnierflügelteils (11) zum Türrahmen (4) bzw. der Fahrzeugtür (3) bei gelöster Schraubverbindung in zwei oder einer Raumebene (H, T) möglich sind und Relativbewegungen des zweiten Scharnierflügelteils (18) zum ersten Scharnierflügelteil (11) bei gelöster Schraubverbindung in einer oder zwei Raumebenen (B) erfolgen können.

6. Verfahren zur Montage eines schwenkbeweglichen Fahrzeugteils nach den Ansprüchen 1 bis 5, bei dem Positionsveränderungen des ersten und des zweiten Scharnierflügelteils (11, 18) parallel zu den beiden Schraubflächen (12, 13) in insgesamt drei Raumebenen (H, B, T) möglich sind, wobei die Raumebenen (H, B, T) horizontal, vertikal in Fahrtrichtung (F) des Fahrzeugs sowie vertikal quer zur Fahrtrichtung (F) gelegen und damit die Fahrzeughöhenposition (h), - breitenposition (b) und -tiefenposition (t) unabhängig voneinander einstellbar sind.

7. Verfahren zur Montage eines schwenkbeweglichen Fahrzeugteils nach den Ansprüchen 1 bis 6, bei dem nach dem Verschrauben der Scharnierflügel (8, 9) ein erneutes Abnehmen der Fahrzeugtür (3) vom Türrahmen (4) erfolgen kann, indem jeweils ein die Scharnierachse (7) definierender Scharnierbolzen (10) in an sich bekannter Weise gezogen oder indem jeweils der einteilige Scharnierflügel (8) von der Fahrzeugtür (3) bzw. dem Türrahmen (4) gelöst wird und bei dem eine erneute positionsgenaue Montage der Fahrzeugtür (3) durch Einstecken der Scharnierbolzen (10) oder Verschraubung der einteiligen Scharnierflügel (8) erfolgt.

8. Scharnier (6) für die Lagerung schwenkbeweglicher Fahrzeugteile in einer zweiflügeligen Ausbildung, wobei
- durch einen an einer Fahrzeugtür (3) oder einem Türrahmen (4) festlegbaren ersten Scharnierflügel (8) eine Scharnierachse (7) definiert ist,
- ein zweiter Scharnierflügel (9) zweiteilig ausgebildet ist,
- ein erstes Scharnierflügelteil (11) zwei etwa rechtwinklig zueinander ausgerichtete Schraubflächen (12, 13) aufweist, die in einer Montageendposition etwa senkrecht in und quer zur Fahrtrichtung (F) stehen,
- ein zweites Scharnierflügelteil (18), das über einen Scharnierbolzen (10) mit dem ersten Scharnierflügel (8) gelenkig verbindbar ist, eine Schraubfläche (13) aufweist, die in der Montageendposition etwa senkrecht steht,
- das erste Scharnierflügelteil (11) begrenzt variabel positionierbar, mit einer Schraubfläche (12) an dem Türrahmen (4) oder der Fahrzeugtür (3) anliegend und das zweite Scharnierflügelteil (18) begrenzt variabel positionierbar, mit der Schraubfläche (13) an der zweiten Schraubfläche (13) des ersten Scharnierflügelteils (11) anliegend verschraubbar ist und wobei
- der zweiteilige Scharnierflügel (9) bei gelösten Schraubverbindungen Positionsveränderungen der Fahrzeugtür (3) unabhängig voneinander in drei Raumebenen (H, B, T) gestattet und diese Positionierungsmöglichkeiten durch Spiel innerhalb der Schraubverbindungen begrenzt sind.

## Claims

1. Method for the assembly of a pivotable vehicle part, in particular a vehicle door (3), on a door frame (4), in which
- on the vehicle door (3) or the door frame (4) are supported at least two two-wing hinges (6) with hinge axes (7) located approximately coaxially with each other, by in each case welding, bolting or riveting a hinge wing (8),
- the vehicle door (3) is transferred by means of an auxiliary device (5) into the desired nominal position relative to the door frame (4) and held therein and
- then in each case a first portion (11) of the second hinge wing (9) is bolted to the door frame (4) or vehicle door (3) and in each case a second portion (18) of the second hinge wing (9) is bolted to the first portion (11), wherein there is automatic adaptation of this hinge wing (9) to the spatial tolerances between the vehicle door (3) and the door frame (4).

2. Method for the assembly of a pivotable vehicle part according to claim 1, in which the two portions (11, 18) of the two-portion hinge wing (9) are bolted together only loosely and movably relative to each other by means of the auxiliary device (5) during door positioning, and bolted together rigidly after door positioning and bolting of the first hinge wing portion (11) to the door frame (4) or vehicle door (3).

3. Method for the assembly of a pivotable vehicle part according to claim 1, in which the two portions (11, 18) of the two-portion hinge wing (9) are rigidly bolted together by means of the auxiliary device (5) during door positioning, the auxiliary device (5) is braced during bolting of the first hinge wing portion (11) to the door frame (4) or vehicle door (3) and in which the bolt connection between the two hinge wing portions (11, 18) is then briefly loosened and tightened again, wherein there is then no longer any bracing of the auxiliary device (5).

4. Method for the assembly of a pivotable vehicle part according to claims 1 to 3, in which on the one hand the first hinge wing portion (11) is bolted to the door frame (4) or vehicle door (3) and on the other hand the two hinge wing portions (11, 18) are bolted to each other with screwing surfaces (12, 13) located approximately at right angles to each other by in each case at least two bolts (16, 17, 21, 22).

5. Method for the assembly of a pivotable vehicle part according to claims 1 to 4, in which relative movements of the first hinge wing portion (11) to the door frame (4) or vehicle door (3) are possible when the bolt connection is loosened in two or one spatial plane (H, T) and relative movements of the second hinge wing portion (18) to the first hinge wing portion (11) can take place when the bolt connection is loosened in one or two spatial planes (B).

6. Method for the assembly of a pivotable vehicle part according to claims 1 to 5, in which changes of position of the first and second hinge wing portions (11, 18) parallel to the two screwing surfaces (12, 13) are possible in a total of three spatial planes (H, B, T), wherein the spatial planes (H, B, T) are located horizontally, vertically in the direction of travel (F) of the vehicle and also vertically transversely to the direction of travel (F) and hence the vehicle height position (h), width position (b) and depth position (t) can be adjusted independently of each other.

7. Method for the assembly of a pivotable vehicle part according to claims 1 to 6, in which after bolting of the hinge wings (8, 9) the vehicle door (3) can be taken off the door frame (4) again by in each case tightening a hinge pin (10) defining the hinge axis (7) in a manner known in the art or in each case loosening the single-portion hinge wing (8) from the vehicle door (3) or door frame (4) and in which the vehicle door (3) is reassembled in the precise position by insertion of the hinge pins (10) or bolting of the single-portion hinge wings (8).

8. Hinge (6) for mounting pivotable vehicle parts in a two-wing construction, wherein
- a hinge axis (7) is defined by a first hinge wing (8) which can be fixed to a vehicle door (3) or door frame (4),
- a second hinge wing (9) is constructed in two portions,
- a first hinge wing portion (11) comprises two screwing surfaces (12, 13) which are oriented approximately at right angles to each other and which in an assembly end position are approximately vertical in and transverse to the direction of travel (F),
- a second hinge wing portion (18) which can be pivotably connected by a hinge pin (10) to the first hinge wing (8) comprises a screwing surface (13) which is approximately vertical in the assembly end position,
- the first hinge wing portion (11) can be bolted so that it can be positioned variably to a limited extent, abutting by a screwing surface (12) against the door frame (4) or vehicle door (3) and the second hinge wing portion (18) can be bolted so that it can be positioned variably to a limited extent, abutting by the screwing surface (13) against the second screwing surface (13) of the first hinge wing portion (11) and wherein
- the two-portion hinge wing (9) when the bolt connections are loosened allows changes of position of the vehicle door (3) independently of each other in three spatial planes (H, B, T) and these positioning options are limited by play within the bolt connections.

## Revendications

1. Procédé de montage d'un composant pivotant de véhicule, notamment d'une porte de véhicule (3) sur un cadre de porte (4), selon lequel
- on fixe à la porte de véhicule (3) ou au cadre de porte (4) au moins deux charnières (6) à deux lames avec leurs axes de rotation (7) sensiblement mutuellement coaxiaux, une lame de charnière (8) étant soudée, vissée ou rivée,
- à l'aide d'un dispositif auxiliaire (5), on amène la porte de véhicule (3) dans la position théorique souhaitée par rapport au cadre de porte (4) et on la maintient dans cette position et
- on fixe par vissage une première partie (11) de la deuxième lame de charnière (9) au cadre de porte (4) ou à la porte de véhicule (3) et une deuxième partie (18) de la deuxième lame de charnière (9) à la première partie de lame de charnière (11), une adaptation automatique de cette lame de charnière (9) aux tolérances tri-dimensionnelles entre la porte de véhicule (3) et le cadre de porte (4) ayant lieu.

2. Procédé de montage d'un composant pivotant de véhicule selon la revendication 1, selon lequel les deux parties (11, 18) de la lame de charnière (9) en deux parties, pendant le positionnement de la porte au moyen du dispositif de positionnement (5), sont assemblées non serrées avec possibilité de déplacement relatif et sont serrées fermement l'une sur l'autre après le positionnement de la porte et la fixation par vissage de la première partie de lame de charnière (11) sur le cadre de porte (4) ou sur la porte de véhicule (3).

3. Procédé de montage d'un composant pivotant de véhicule selon la revendication 1, selon lequel les deux parties (11, 18) de la lame de charnière (9) en deux parties, pendant le positionnement de la porte au moyen du dispositif de positionnement (5), sont assemblées serrées l'une sur l'autre, selon lequel on déforme le dispositif de positionnement (5) pendant la fixation par vissage de la première partie de lame de charnière (11) sur le cadre de porte (4) ou la porte de véhicule (3) et selon lequel on desserre brièvement l'assemblage par vis entre les deux parties de lame de charnière (11, 18) puis on le serre de nouveau fermement, la déformation du dispositif auxiliaire (5) étant annulée.

4. Procédé de montage d'un composant pivotant de véhicule selon les revendications 1 à 3, selon lequel la fixation par vissage de la première partie de lame de charnière (11) sur le cadre de porte (4) ou la porte de véhicule (3) d'une part et l'assemblage par vissage des deux parties de lame de charnière (11, 18) entre elles d'autre part, avec des surfaces de fixation (12, 13) disposées sensiblement à angle droit l'une par rapport à l'autre, sont réalisés à l'aide d'au moins deux vis (16, 17, 21, 22) chaque fois.

5. Procédé de montage d'un composant pivotant de véhicule selon les revendications 1 à 4, selon lequel des déplacements relatifs de la première partie de lame de charnière (11) par rapport au cadre de porte (4) ou à la porte de véhicule (3) sont possibles dans deux plans ou dans un plan (H, T) dans l'espace lorsque la fixation vissée n'est pas serrée et des déplacements de la deuxième partie de lame de charnière (18) par rapport à la première partie de lame de charnière (11) peuvent avoir lieu dans un ou deux plans (B) dans l'espace lorsque l'assemblage vissé n'est pas serré.

6. Procédé de montage d'un composant pivotant de véhicule selon les revendications 1 à 5, selon lequel des modifications de position des première et deuxième parties de charnière (11, 18), parallèlement aux deux surfaces de fixation (12, 13), sont possibles dans au total trois plans (H, B, T) dans l'espace, les plans (H, B, T) étant situés dans la direction horizontale, la direction verticale et la direction de déplacement (F) du véhicule, les positions du véhicule en hauteur (h), en largeur (b) et en profondeur (t) étant ainsi réglables indépendamment l'une de l'autre.

7. Procédé de montage d'un composant pivotant de véhicule selon les revendications 1 à 6, selon lequel après la fixation par vissage des lames de charnière (8, 9), la porte de véhicule (3) peut être démontée du cadre de porte (4) en retirant chaque fois, de manière connue, une broche de charnière (10) qui définit l'axe de rotation (7) ou en démontant chaque fois la lame de charnière monobloc (8) de la porte de véhicule (3) ou du cadre de porte (4) et selon lequel un remontage dans la position exacte de la porte de véhicule (3) a lieu par mise en place des broches de charnières (10) ou par fixation par vissage de la lame de charnière monobloc (8).

8. Charnière (6) pour le montage de composants pivotants de véhicules, de type à deux lames, dans laquelle
- un axe de rotation (7) est défini par une première lame de charnière (8) pouvant être fixée à une porte de véhicule (3) ou à un cadre de porte (4),
- une deuxième lame de charnière (9) est réalisée en deux parties,
- une première partie de lame de charnière (11) présentant deux surfaces de fixation (12, 13) disposées à angle droit l'une par rapport à l'autre qui, dans une position finale de montage sont sensiblement perpendiculaires, transversalement à la direction de déplacement (F) du véhicule,
- une deuxième partie de lame de charnière (18) pouvant être liée de manière articulée à la première lame de charnière (8) au moyen d'une broche de charnière (10) et présentant une surface de fixation (13) qui est sensiblement verticale dans la position finale de montage,
- la première partie de lame de charnière (11) pouvant être positionnée dans certaines limites avec une surface de de fixation (12) sur le cadre de porte (4) ou la porte de véhicule (3) et la deuxième partie de lame de charnière (18) pouvant être positionnée dans certaines limites avec la surface de fixation (13) sur la deuxième surface de fixation de la première partie de lame de charnière (11) et
- la lame de charnière (9) en deux parties, lorsque les liaisons vissées sont desserrées, permettant de modifier la position de la porte de véhicule (3) de manière indépendante dans trois plans (H, B, T) dans l'espace et les possibilités de positionnement étant limitées par jeu dans les liaisons vissées.
